Europäisches Patentamt

European Patent Office

Office européen des brevets

(19)

(11) **EP 0 960 069 B1**

(12) **FASCICULE DE BREVET EUROPEEN**

(45) Date de publication et mention
de la délivrance du brevet:
**12.12.2001 Bulletin 2001/50**

(21) Numéro de dépôt: **98903098.6**

(22) Date de dépôt: **21.01.1998**

(51) Int Cl.[7]: **C01F 7/06**

(86) Numéro de dépôt international:
**PCT/FR98/00104**

(87) Numéro de publication internationale:
**WO 98/32696 (30.07.1998 Gazette 1998/30)**

(54) **PROCEDE AMELIORE DE TRAITEMENT DE BAUXITES RICHES EN MONOHYDRATE D'ALUMINE**

VERBESSERTES VERFAHREN ZUR BEHANDLUNG VON ALUMINIUMMONOHYDRATREICHEN BAUXITEN

IMPROVED METHOD FOR PROCESSING BAUXITE RICH IN ALUMINA MONOHYDRATE

(84) Etats contractants désignés:
**DE ES FR GB GR IE IT**

(30) Priorité: **22.01.1997 FR 9700850**

(43) Date de publication de la demande:
**01.12.1999 Bulletin 1999/48**

(73) Titulaire: **ALUMINIUM PECHINEY**
**75218 Paris Cedex 16 (FR)**

(72) Inventeur: **LAMERANT, Jean-Michel**
**F-13320 Bouc Bel Air (FR)**

(74) Mandataire: **Mougeot, Jean-Claude**
**PECHINEY**
**Immeuble "SIS"**
**217 ,cours Lafayette**
**69451 Lyon Cedex 06 (FR)**

(56) Documents cités:
**EP-A- 0 382 383         WO-A-96/19410**
**WO-A-96/30305         US-A- 2 701 752**

- **CHEMICAL ABSTRACTS, vol. 75, no. 22, 29 novembre 1971 Columbus, Ohio, US; abstract no. 131255, OSVALD, ZOLTAN ET AL: "Processing bauxites containing diaspore" XP002042449 & HU 2 177 A (FEMIPARI KUTATO INTEZET;ALUTERV ALUMINIUMIPARI TERVEZO VALLALAT)**

## Description

DOMAINE TECHNIQUE

La présente invention concerne le traitement par attaque alcaline selon le procédé Bayer de bauxites à monohydrate d'alumine ou boehmite, incluant un apport de trihydrate d'alumine ou gibbsite.

ETAT DE LA TECHNIQUE

Le procédé Bayer largement décrit dans la littérature spécialisée constitue la technique essentielle de production d'alumine destinée à être transformée en aluminium par électrolyse ignée ou à être utilisée à l'état d'hydrate, d'alumine de transition, d'alumine calcinée, d'alumine frittée ou fondue, dans les nombreuses applications relevant du domaine des alumines techniques.

Selon ce procédé, le minerai de bauxite est attaqué à chaud au moyen d'une solution aqueuse d'hydroxyde de sodium à concentration appropriée, provoquant ainsi la solubilisation de l'alumine et l'obtention d'une suspension constituée de particules de résidu inattaqué (boues) dans une solution d'aluminate de sodium, appelée "liqueur d'aluminate".

En général, cette suspension est ensuite diluée de façon à séparer par décantation les boues de la liqueur d'aluminate. Celle-ci, une fois "nettoyée" de ces boues, est refroidie jusqu'à une température où elle se trouve dans un état en fort déséquilibre de sursaturation. On la nomme à ce stade "liqueur sursaturée". Des particules de trihydrate d'alumine sont alors ensemencées dans le but de provoquer la "décomposition" de la liqueur sursaturée, c'est-à-dire la précipitation de l'alumine sous forme de trihydrate d'alumine. Enfin, la liqueur d'atuminate de sodium, appauvrie en alumine du fait de la précipitation, appelée "liqueur décomposée", est recyclée vers l'étape de l'attaque après avoir été concentrée par évaporation et apport éventuel en hydroxyde de sodium pour constituer une liqueur, dite "liqueur d'attaque", dont la concentration est appropriée à l'attaque du minerai.

Il est bien connu de l'homme du métier que les conditions de traitement doivent être adaptées au degré d'hydratation et à la structure cristallographique de l'alumine contenue dans la bauxite ainsi qu'à la nature et à la teneur des impuretés qu'elle contient.

Les bauxites contenant de l'alumine à l'état de monohydrate (boehmite, diaspore) sont plus difficiles à attaquer que la bauxite à trihydrate et sont traitées selon le procédé Bayer à des températures supérieures à 200°C, généralement comprises entre 220 et 300°C. Les bauxites contenant de l'alumine à l'état de trihydrate (gibbsite) sont traitées à des températures inférieures à 200°C et généralement comprises entre 100 et 170°C.

On définit le rendement d'attaque par le rapport entre la quantité d'alumine dissoute dans la liqueur d'attaque et la quantité d'alumine totale contenue dans le minerai. Actuellement, pour des bauxites à monohydrates contenant entre 2 et 3 % de silice, on atteint généralement un rendement d'attaque voisin de 90%.

Les principaux facteurs qui agissent sur le rendement d'attaque de la bauxite sont la température et la concentration en hydroxyde de sodium ou soude caustique "libre", c'est-à-dire susceptible de dissoudre de l'alumine. Il est courant d'exprimer la soude caustique par le groupement de base Na20 et de donner la concentration en soude caustique en grammes Na2O par litre (g Na2O/l).

On caractérise d'autre part l'état de saturation ou de stabilité des liqueurs par le rapport pondéral:

$$R_p = \frac{\text{concentration en } Al_2O_3 \text{ dissoute } (en\ g\ /\ l)}{\text{concentration en } Na_2O \text{ caustique } (en\ g\ /\ l)}$$

S'agissant des bauxites riches en monohydrate, la cinétique de dissolution diminue fortement au fur et à mesure que la dissolution s'effectue, de telle sorte que, dans des conditions de traitement restant économiquement acceptables, la quantité d'alumine solubilisée reste sensiblement inférieure à ce qu'elle pourrait être avec la même quantité de soude attaquant du trihydrate d'alumine. Ainsi le Rp maximum atteint avec une bauxite à monohydrate est de l'ordre de 1,20 alors que celui obtenu avec une bauxite à trihydrate peut atteindre 1,40.

Ce rapport pondéral Rp, caractéristique de l'état de saturation en alJmine dissoute dans la liqueur du cycle Bayer, permet de déterminer la productivité de la liqueur lors de sa décomposition. Celle-ci est définie par la quantité d'alumine restituée, sous forme de trihydrate d'alumine, après décomposition de la liqueur sursaturée, rapportée à un volume donné de iiqueur sursaturée. La productivité, exprimée en kilogrammes d'alumine par mètre cube de liqueur (kg $Al_2O_3/m^3$), est obtenue en multipliant la variation du Rp avant et après décomposition par la concentration en soude caustique de la liqueur sursaturée. En général, cette concentration est plus élevée dans les procédés Bayer de type européen que dans les procédés de type américain et ceci explique pourquoi une productivité à la décomposition de la liqueur sursaturée est considérée comme bonne lorsqu'elle dépasse 70 kg $Al_2O_3/m^3$ pour un procédé Bayer de type américain et lorsqu'elle dépasse 80 kg $Al_2O_3/m^3$ pour un procédé Bayer de type européen.

Dans le cas des bauxites à monohydrate, la productivité de la décomposition pourrait être augmentée s'il était possible d'accroître la teneur en alumine dissoute, donc le rapport pondéral Rp, par exemple par ajout de trihydrate d'alumine et dissolution au cours du refroidissement de la liqueur, avant la séparation des résidus inattaqués. La solubilité du trihydrate est en effet bonne jusqu'à 100°C environ en milieu alcalin et une telle opération augmenterait, au moins dans un premier temps, la quantité d'alumine dissoute, de telle sorte que le rapport pondéral Rp pourrait atteindre 1,25, voire 1,30.

Un tel mode de sursaturation de la liqueur, développé dans les années 50 sous le nom de "sweetening", s'est révélé difficilement exploitable industriellement. Il est en effet connu (YAMADA- JI of Jap. Inst. of Light Metals- vol.31 p.43-48- Janvier 1981) que dans ces conditions extrêmes de sursaturation, une partie de l'alumine reprécipite de façon intempestive avant ou pendant la séparation du résidu inattaqué et est évacuée avec lui: il s'agit de la rétrogradation, phénomène particulièrement néfaste qu'il faut éviter puisqu'il diminue le rendement d'extraction de l'alumine.

Ainsi le "sweetening" mis en oeuvre selon US 2 701 752, consistant à ajouter une certaine quantité de trihydrate à la suspension au cours du refroidissement après l'attaque à haute température du monohydrate, limite le Rp après attaque à moins de 1,08 avec des concentrations en soude n'excédant pas 120 g $Na_2O/l$. Ces conditions permettent certes de minimiser le risque de rétrogradation mais au détriment de la productivité de la liqueur qui n'excède pas 70 kg $Al_2O_3/m^3$.

Le sweetening, dans de telles conditions, a pour seul intérêt de réduire le coût énergétique du traitement puisqu'il introduit une attaque de trihydrate à coût énergétique nul, en utilisant la chaleur fournie pour l'attaque du monohydrate.

Il apparaît donc clairement que les différents moyens de l'art antérieur, destinés à limiter les effets nocifs de la rétrogradation sur le rendement d'extraction de l'alumine, sont mis en oeuvre au détriment de la productivité de la liqueur dont le rapport pondéral Rp ne peut guère excéder 1,15.

PROBLEME POSE

Pour les producteurs d'alumine la mise au point d'un procédé performant de traitement de bauxites riches en monohydrates reste donc un objectif à atteindre compte tenu par ailleurs de l'importance de ce type de bauxite comme source d'approvisionnement. Il doit pouvoir satisfaire en particulier aux critères suivants :

- rendement d'attaque de l'alumine totale supérieur à 90%;
- productivité à la décomposition supérieure à 70 kg $Al_2O_3/m^3$ de liqueur, et pouvant dépasser 90 kg $Al_2O_3/m^3$ dans un procédé Bayer de type européen;
- diminution de la quantité d'énergie nécessaire pour dissoudre une même quantité d'alumine.

OBJET DE L'INVENTION

Le procédé selon l'invention mis au point par la demanderesse permet de satisfaire à ces critères. A cet effet, une étape de "sweetening" est introduite dans le procédé mais dans des conditions de mise en oeuvre totalement différentes.

Plus précisément, l'invention concerne un procédé de traitement de bauxite à base de monohydrate d'alumine par attaque sodique et à haute température de la bauxite broyée pour former une suspension qui est décantée et filtrée pour séparer une liqueur d'aluminate de sodium destinée à être décomposée en présence d'amorce et un résidu insoluble, le procédé étant caractérisé par la succession d'opérations suivantes :

a) attaque à température supérieure à 200°C de la bauxite, de préférence préalablement broyée, par mise en contact, éventuellement sous agitation, avec une liqueur dont la concentration en soude caustique est supérieure ou égale à 160 g Na20 /litre et dont le rapport pondéral Rp est compris entre 0,45 et 0,75, pendant un temps de contact suffisant pour solubiliser le monohydrate d'alumine et atteindre un Rp compris entre 1,10 et 1,20:

b) refroidissement et détente de la suspension ainsi formée puis introduction de trihydrate d'alumine dans ladite suspension, à une température inférieure à 200°C, pour obtenir lors de la mise à la pression atmosphérique, la température étant légèrement inférieure à la température d'ébullition, un Rp de la liqueur d'aluminate compris entre 1,20 et 1,30;

c) première dilution de la suspension permettant d'obtenir une concentration en soude caustique comprise entre 160 et 175 g Na20/litre;

d) décantation de la suspension ainsi formée, de préférence en présence d'un floculant, pour séparer du résidu insoluble une liqueur d'aluminate de sodium dont le Rp doit être compris entre 1,20 et 1,30.

e) filtration de la liqueur d'aluminate

f) dilution complémentaire abaissant la concentration de la liqueur d'aluminate à moins de 160 g Na20/litre effectuée avant ou au cours de la décomposition, où le trihydrate d'alumine précipite, une partie étant recyclée comme amorce, l'autre partie étant filtrée puis lavée.

g) recyclage, après séparation du trihydrate d'alumine par filtration, de la liqueur décomposée qui, après concentration, par exemple par évaporation et ajout éventuel d'hydroxyde de sodium, est réutilisée comme liqueur d'attaque en tête du procédé avec une concentration en soude caustique supérieure ou égale à 160 g Na2O/l.

De préférence, l'introduction de trihydrate d'alumine de l'étape b) est effectuée par injection d'une pulpe obtenue par broyage, en présence d'une aliquote de la liqueur d'attaque, d'une bauxite à trihydrate d'alumine ou de déchets en contenant.

De préférence également, la dilution complémentaire de la liqueur, qui s'effectue selon l'invention après l'étape de décantation, est réalisée avec une fraction des eaux de lavage du résidu inattaqué, elles-mêmes pouvant contenir les eaux de lavage du trihydrate d'alumine produit. Placée avant ou au cours de la décomposition, il convient d'éviter toute pollution par ces eaux de lavage, par exemple par une filtration préalable. On peut par exemple diluer la liqueur, la filtrer puis l'introduire dans la chaîne des décomposeurs.

La demanderesse a constaté qu'elle pouvait, contre toute attente, retarder, au moins partiellement, la dilution de la liqueur d'aluminate jusqu'au début de sa décomposition. Ce mode opératoire est pourtant contraire à la pratique courante, où l'homme du métier effectue une dilution de la suspension par apport d'eau pour faciliter la décantation des boues. Cette dilution présente le double avantage de diminuer sa viscosité et de permettre l'adjonction de nombreux agents de floculation, instables dans des liqueurs trop concentrées. En revanche, elle augmente la sursaturation en alumine, ce qui favorise la rétrogradation. Mais les cinétiques de précipitation sont lentes lorsque Rp n'excède pas 1,10-1,15, voire 1,20, de sorte que ce risque a toujours été considéré comme faible si les temps de décantation ne sont pas trop élevés. En effet, si la décantation dure trop longtemps, les fines particules de résidu inattaqué présentes dans la suspension peuvent servir d'amorce à la précipitation et une rétrogradation intense peut encore se développer 5 ou 6 heures après le début de la décantation. Pour l'homme du métier, la dilution avant séparation des boues, parce qu'elle permet d'accélérer le temps de décantation et préserve la stabilité des floculants, a donc toujours été considérée comme obligatoire.

De façon surprenante, il est apparu à la demanderesse que, compte tenu des agents floculants actuellement utilisés - ce sont généralement des polyélectrolytes anioniques, par exemple des polyacrylates synthétiques que l'on peut avantageusement combiner avec un adjuvant de clarification à base de polysaccharides -, il était possible d'effectuer, dans un temps acceptable, la décantation des insolubles dans une liqueur d'aiuminate concentrée en dépit d'un Rp très élevé, supérieur à 1,20, sans qu'il se produise de rétrogradation. Il s'avère que l'effet retardateur de la rétrogradation dû à la haute teneur en soude l'emporte sur l'effet accélérateur dû à une légère augmentation du temps de décantation. D'autre part, la forte concentration de l'aluminate augmente sensiblement sa température d'ébullition, ce qui permet de décanter à plus haute température et de réduire encore le risque de rétrogradation.

En d'autres termes, malgré un Rp très élevé, supérieur à 1,20, obtenu par sweetening, le risque de rétrogradation de la liqueur sursaturée au cours de la séparation des insolubles est considérablement réduit dès lors que la concentration en soude caustique reste supérieure ou égale à 160 g Na20/l, en raison du report partiel de la dilution après l'étape de décantation.

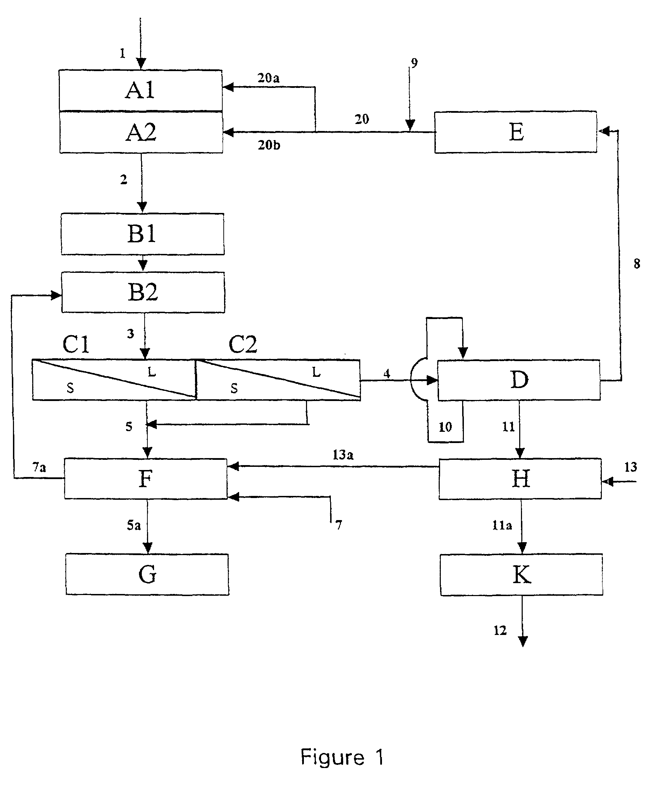

Ce qui compte ici en effet, c'est le fait qu'une partie de la dilution ait été reportée après la décantation. On peut effectuer cette dilution complémentaire de la liqueur d'aluminate en une seule fois, au tout début de la décomposition. C'est la procédure simple choisie dans nos exemples. Mais on peut également, pour améliorer encore la productivité, aménager la chaîne de décomposition de telle sorte que la dilution soit effectuée en plusieurs étapes au cours de la décomposition. il est en effet connu (J.V. Sang et al, Light Metais 1989, pp33-39, Fig.1) que la concentration en soude optimale vis-à-vis de la productivité diminue au fur et à mesure que le Rp diminue. Or le Rp diminue inévitablement au cours de la décomposition. On a donc intérêt à diluer progressivement la liqueur de la suspension d'aluminate circulant dans la chaîne de décomposition, de façon à rester continuellement à l'optimum de productivité.

L'invention sera mieux comprise par la description détaillée de sa mise en oeuvre fondée sur les figures suivantes:.

- Fig. 1 représentant schématiquement les flux de produit dans un procédé d'attaque selon l'art antérieur

- Fig. 2 représentant schématiquement les flux de produit dans le procédé de base selon l'invention

## MISE EN OEUVRE DE L'INVENTION

Selon la Fig. 1 représentative de l'art antérieur, la bauxite à monohydrate 1 subit un broyage humide A1 en présence d'une aliquote 20a de liqueur d'attaque 20, dont le Rp est de préférence compris entre 0,5 et 0,7 et la concentration en soude caustique est comprise entre 160 et 220g Na2O/l. L'ensemble est introduit avec l'autre aliquote 20b de la liqueur d'attaque 20 dans des autoclaves pour former une suspension qui est chauffée à une température comprise entre 220 et 300°C pendant une durée suffisante, généralement comprise entre 0,2 et 1 heure, pour solubiliser le monohydrate d'alumine. La suspension 2 issue de cette attaque sous pression A2 est refroidie et détendue jusqu'à la pression atmosphérique (Refroidissement/Détente B1), puis diluée (Dilution B2). La concentration en soude après ladite dilution est inférieure à 160 g Na2O/l, de préférence entre 140 et 150 g Na2O/l. La suspension résultante 3 est alors soumise à décantation C1 en présence d'un agent floculant puis à filtration C2 pour séparer les résidus insolubles 5 de la liqueur d'aluminate 4. Après lavage F, avec les eaux 7 et les eaux de lavage 13a issues de la décomposition, les résidus inertes 5a, ou boues, sont évacués pour mise en décharge G et l'eau de lavage 7a est utilisée pour la dilution B2 de la suspension 3 avant la décantation C1.

La liqueur d'aluminate 4, dont le Rp est compris entre 1,05 et 1,15 et la concentration en soude est comprise entre 110 et 160 g Na20/l, est ensuite refroidie et décomposée entre 80°C et 50°C (décomposition D), en présence de fines particules de précipité 10 recyclées pour servir d'amorce. Les grains de trihydrate d'alumine ainsi obtenus sont classés de telle sorte que les plus gros 11 sont récupérés et, après lavage H à l'eau 13, calcinés (calcination K) pour former l'alumine de production 12, tandis que les plus fins 10 restent au sein de l'amorce recyclée. La liqueur décomposée 8, de Rp compris entre 0,5 et 0,7, est ensuite reconcentrée par évaporation E avec un éventuel ajout de soude 9 et devient la liqueur d'attaque 20.

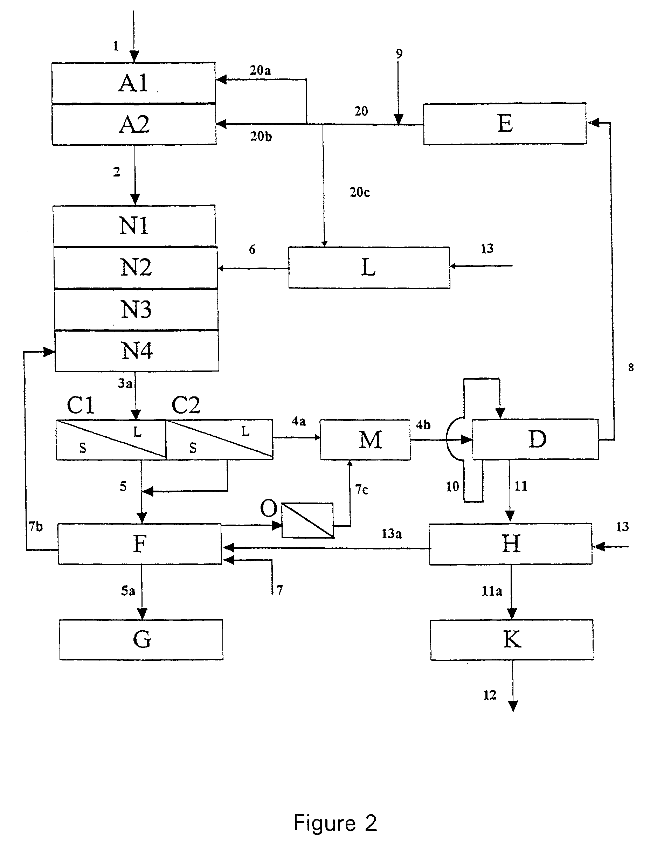

Le procédé de base selon l'invention schématisé à la fig. 2 est mis en oeuvre de la façon suivante: La même bauxite à monohydrate 1, après un premier broyage humide A1 en présence d'une aliquote 20a de liqueur d'attaque 20, dont le Rp est de préférence compris entre 0,55 et 0,65 et la concentration en soude est comprise entre 160 et 220 g Na2O/l, est introduite avec une autre aliquote 20b de la liqueur d'attaque 20 dans des autoclaves pour former une suspension qui est chauffée à une température comprise entre 220 et 300°C pendant une durée suffisante pour solubiliser le monohydrate d'alumine, comprise entre 0,2 et 1 heure. La suspension 2 issue de cette première attaque sous pression A2, de Rp compris entre 1,05 et 1,20, est partiellement refroidie et détendue (Refroidissement/Détente N1). A une température inférieure à 200°C, on injecte sous pression ("Sweetening" N2) une pulpe 6 contenant du trihydrate d'alumine, résultant du broyage humide L de bauxite à trihydrate 13 avec une troisième aliquote 20c de la liqueur d'attaque 20. Avant d'être injectée dans la suspension 2, la pulpe broyée 6 est maintenue pendant un temps de séjour compris entre 3 et 24 heures, de façon à produire une prédésilicatation de ladite pulpe.

L'injection s'effectue de préférence entre 190 et 130°C dans le détendeur qui correspond à cette température et qui assure un temps de séjour d'au moins deux minutes. La suspension 3a, enrichie en alumine grâce à l'injection de la pulpe broyée 6, est ensuite refroidie et détendue jusqu'à la pression atmosphérique. Elle a un Rp compris entre 1,20 et 1,28 et sa concentration en soude caustique est comprise entre 180 et 220 g Na2O/l. Elle est soumise à une première dilution par apport d'une fraction 7b de liqueur diluée remontant du lavage des boues. Sa concentration est abaissée à une valeur comprise entre 160 et 175 g Na2O/l, Puis elle est soumise, à une température légèrement inférieure à la température d'ébullition, d'au plus 5° inférieure, à une décantation C1 en présence d'un agent floculant et enfin à une filtration C2 pour séparer la liqueur 4a d'aluminate de sodium des résidus insolubles 5. Après lavage à contre-courant par de l'eau 7 et par les eaux de lavage 13a du trihydrate d'alumine produit 11, ces résidus inertes 5a, ou boues sont mis en décharge G.

La liqueur d'aluminate 4a est diluée (dilution M) avec les eaux de lavage 7c filtrées (filtration O) des résidus 5. La solution diluée 4b a une concentration en soude comprise entre 140 et 155 g Na2O/l. Elle est ensuite refroidie et décomposée (D) entre 80°C et 50°C, en présence de fines particules de précipité 10 recyclées servant d'amorce. Les grains de trihydrate d'alumine ainsi obtenus sont classés de telle sorte que les plus gros 11 sont récupérés pour lavage H à l'eau 13 et calcination K en vue de fournir l'alumine de production 12, tandis que les plus fins restent au sein de l'amorce 10 recyclée. La liqueur décomposée 8 est ensuite reconcentrée par évaporation et djout éventuel de soude de façon à atteindre une concentration en soude caustique comprise entre 160 et 220 g Na2O/l. Une fois concentrée, la liqueur est utilisée comme liqueur d'attaque 20.

EXEMPLES D'APPLICATION

Dans les exemples 1 (selon l'art antérieur), 2 et 3 (selon l'invention), on a attaqué selon un procédé Bayer de type européen une première bauxite à monohydrate (diaspore). Dans l'exemple 4, on a attaqué selon un procédé Bayer de type américain une bauxite australienne à monohydrate (boehmite).

La composition pondérale à sec de la première bauxite est la suivante:

| élément | % en poids |
|---|---|
| $Al_2O_3$ | 56,77 |
| $Fe_2O_3$ | 21,58 |
| $SiO_2$ totale | 2,63 |
| $TiO_2$ | 2,69 |
| perte au feu et divers | 16,33 |

EXEMPLE 1

Selon l'art antérieur, un lot de 100 tonnes de ladite bauxite a été attaqué à 260 °C pendant 1 heure avec une liqueur d'attaque concentrée à 210 g Na2O/l.

Après détente, refroidissement, dilution et décantation, nous avons obtenu les résultats suivants:

Liqueur avant décomposition
    Rp:    1,15
    Concentration en soude caustique:    146 g Na2O/l
Liqueur après décomposition
    Rp:    0,58
Rendement global d'attaque: 90,6% alumine solubilisée/alumine totale
Productivité à la décomposition:    83 kg $Al_2O_3$/$m^3$
Energie nécessaire pour l'attaque de 1 kilogramme d'alumine: 3,55 MJ

EXEMPLE 2

Un autre lot de 100 tonnes de la même bauxite a été attaqué suivant une première modalité de l'invention:

Attaque à 260 °C pendant 1 heure avec une liqueur d'attaque concentrée à 210 g Na2O/l. Refroidissement jusqu'à 160°C.

La suspension étant maintenue agitée, on a injecté sous forme de suspension 9,2 tonnes d'une bauxite africaine riche en trihydrate (85%) qui a été broyée auparavant en présence d'une aiiquote de la liqueur d'attaque.

La bauxite à trihydraie a la composition pondérale suivante:

| élément | % en poids |
|---|---|
| $Al_2O_3$ | 56,5 |
| $Fe_2O_3$ | 4,8 |
| $SiO_2$ totale | 1,4 |
| $TiO_2$ | 3,7 |
| perte au feu et divers | 33,6 |

Cette suspension est mélangée à la suspension principale et l'attaque est maintenue pendant 5 minutes. La quantité d'alumine dissoute est telle que le rapport pondéral Rp de la liqueur sursaturée atteint 1,25.

Après détente, on a effectué une première dilution ayant conduit à une concentration 168 g Na2O/l puis une décantation à 104°C, en présence de floculant CYTEC® HX 400, à raison de 600 g/tonne de résidu insoluble. Après séparation des résidus insolubles, la liqueur d'aluminate est à nouveau diluée jusqu'à une concentration de 147 g Na2O/l.

Après dilution, nous avons obtenu les résultats suivants:

Liqueur avant décomposition
    Rp:     1,21
Liqueur après décomposition
    Rp:     0,585
Rendement global d'attaque: 91,0% alumine solubilisée/alumine totale
Productivité à la décomposition:     91,5 kg $Al_2O_3/m^3$
Energie nécessaire pour l'attaque de 1 kilogramme d'alumine: 3,25 MJ

EXEMPLE 3

Un autre lot de 100 tonnes de la même bauxite a été attaqué suivant une deuxième modalité de l'invention:

Attaque à 260 °C pendant 1 heure avec une liqueur d'attaque concentrée à 210 g Na2O/l. Refroidissement jusqu'à 130°C.

La suspension étant maintenue agitée, on a injecté sous forme de suspension 13 tonnes d'une bauxite brésilienne riche en trihydrate, broyée auparavant en présence d'une aliquote de la liqueur d'attaque. La quantité d'alumine dissoute est telle que le rapport pondéral Rp de la liqueur d'aluminate atteint 1,27/1,28.

Après détente et première dilution à 175 g Na2O/l, on a laissé décanter à 108 °C en présence de floculant CYTEX® HX 400 à raison de 800 g / tonne de résidus insolubles. Après séparation des résidus, la liqueur est diluée jusqu'à une concentration de 146 g Na2O/l.

Après dilution, nous avons obtenu les résultats suivants:

Liqueur sursaturée avant décomposition
    Rp:     1,23
Liqueur sursaturée après décomposition
    Rp:     0,59
Rendement global d'attaque: 91,3% alumine solubilisée/alumine totale
Productivité à la décomposition:     93 kg $Al_2O_3/m^3$
Energie nécessaire pour l'attaque de 1 kilogramme d'alumine: 3,15 MJ

EXEMPLE 4: Sweetening et report partiel de dilution sur un Bayer américain

Dans cet exemple, on a attaqué une bauxite australienne à monohydrate (boehmite) ayant la composition pondérale à sec suivante:

| élément | % en poids |
|---|---|
| $Al_2O_3$ | 54,22 |
| $Fe_2O_3$ | 12,01 |
| $SiO_2$ totale | 5,6 |
| $TiO_2$ | 2,83 |
| perte au feu et divers | 25,34 |

Un lot de 100 tonnes de cette bauxite australienne à monohydrate a été attaqué suivant une troisième modalité de l'invention:

Attaque à 265 °C pendant 20 minutes avec une liqueur d'attaque concentrée à 180 g Na2O/l.

Après détente partielle, on a injecté dans la suspension refroidie à 180°C une suspension contenant 11 tonnes de bauxite africaine riche en trihydrate, ayant subi un broyage préalable dans un minimum de liqueur d'attaque suivi d'une désilicatation pendant 8 heures à 100°C. La quantité d'alumine dissoute est telle que le rapport pondéral Rp de la liqueur d'aluminate atteint 1,23.

Une première dilution à 160 g Na2O/l est effectuée avant la décantation à 103 °C en présence de floculant CYTEX® HX 400 à raison de 500 g / tonne de résidu insoluble, puis la liqueur est diluée jusqu'à une concentration de 130 g Na2O/l.

Nous avons obtenu les résultats suivants:

Liqueur avant décomposition
     Rp:      1,20
Liqueur après décomposition
     Rp:      0,63
Rendement global d'attaque: 88,4% alumine solubilisée/alumine totale
Productivité à la décomposition:      74 kg $Al_2O_3$/ $m^3$
Energie nécessaire pour l'attaque de 1 kilogramme d'alumine: 3,35 MJ

## Revendications

1. Procédé de traitement de bauxite à base de monohydrate d'alumine (1) par attaque sodique et à haute température (A2) de la bauxite broyée pour former une suspension qui est décantée (C1) et filtrée (C2) pour séparer un résidu insoluble (5) et une liqueur sursaturée d'aluminate de sodium destinée à être décomposée (D) en présence d'amorce (10), le procédé débutant par l'étape suivante :

   a) attaque (A2) à température supérieure à 200°C de la bauxite (1), par mise en contact avec une liqueur (20) dont la concentration en soude caustique est supérieure ou égale à 160 g Na20 /litre et dont le rapport pondéral Rp est compris entre 0,45 et 0,75, pendant un temps de contact suffisant pour solubiliser le monohydrate d'alumine et atteindre un Rp compris entre 1,10 et 1,20;
   puis étant suivi par la succession d'étapes caractéristique suivante:
   b) refroidissement et détente (N1) de la suspension ainsi formée puis introduction (N2) de trihydrate d'alumine (6) dans ladite suspension, à une température inférieure à 200°C, pour obtenir lors de la mise à la pression atmosphérique (N3) un Rp de la liqueur d'aluminate compris entre 1,20 et 1,30;
   c) première dilution (N4) de la suspension permettant d'obtenir une concentration en soude caustique comprise entre 160 et 175 g Na20/litre;
   d) décantation de la suspension (3a) ainsi formée pour séparer du résidu insoluble (5) une liqueur d'aluminate de sodium (4a) dont le Rp doit être compris entre 1,20 et 1,30.
   e) filtration de la liqueur d'aluminate (4a)
   f) dilution complémentaire (M) abaissant la concentration de la liqueur d'aluminate à moins de 160 g Na20/litre, effectuée avant ou au cours de la décomposition (D).
   g) recyclage, après séparation du trihydrate d'alumine par filtration, de la liqueur décomposée (8) qui, après concentration (E) est réutilisée comme liqueur d'attaque (20) en tête du procédé avec une concentration en soude caustique supérieure ou égale à 160 g Na2O/l.

2. Procédé de traitement de bauxite selon la revendication 1, **caractérisé en ce que** la concentration en soude caustique de la liqueur d'attaque est comprise entre 160et 220 g Na2O/l.

3. Procédé de traitement de bauxite selon l'une quelconque des revendications 1 à 2, **caractérisé en ce que** l'attaque de la bauxite à monohydrate est effectuée entre 220°C et 300°C pendant 0,2 à 1 heure.

4. Procédé de traitement de bauxite selon l'une quelconque des revendications 1 à 3, caractécisé en ce que l'introduction en trihydrate d'alumine de l'étape b) est effectuée par injection d'une pulpe (6) obtenue par broyage en présence d'une aliquote de la liqueur d'attaque (20c) d'une bauxite à trihydrate d'alumine (13) ou de déchets en contenant.

5. Procédé de traitement de bauxite selon l'une quelconque des revendications 1 à 4, **caractérisé en ce que** l'introduction du trihydrate d'alumine dans la suspension s'effectue entre 130°C et 190°C.

6. Procédé de traitement de bauxite selon l'une quelconque des revendications 1 à 5, **caractérisé en ce que** la suspension (3a) issue du "sweetening" (N2) est soumise à décantation en présence de floculant de type polyacrylate synthétique à une température au moins égale à la température d'ébullition moins cinq degrés Celsius.

7. Procédé de traitement de bauxite selon l'une quelconque des revendications 1 à 6, carqctérisé en ce que la liqueur sursaturée d'aluminate de sodium (4a) obtenue après décantation (C1) et filtration (C2) a un Rp compris entre 1,20 et 1,28.

8. Procédé de traitement de bauxite selon l'une quelconque des revendications 1 à 7, **caractérisé en ce que** la dilution complémentaire (M) de la liqueur d'aluminate (4a), est effectuée après filtration (C2) de ladite liqueur, avec une fraction préalablement filtrée (7c) des eaux de lavage des résidus inattaqués pouvant contenir les eaux de lavage (13a) du trihydrate produit.

9. Procédé de traitement de bauxite selon l'une quelconque des revendications 1 à 8, **caractérisé en ce que** la liqueur d'aluminate de sodium (4a) obtenue après décantation (C1) et filtration (C2) est diluée (M) jusqu'à une concentration en soude caustique comprise entre 140 et 155 g Na2O/l puis décomposée entre 80°C et 50°C.

10. Procédé de traitement de bauxite selon l'une quelconque des revendications 1 à 9, **caractérisé en ce que** le Rp de la liqueur en fin de décomposition (D) est compris entre 0,55 et 0,65.

**Claims**

1. A method for processing alumina monohydrate based bauxite (1) by disgesting ground bauxide in caustic soda at high temperature (A2) in order to form a slurry which is settled (C1) and filtered (C2) for separating an insoluble residue (5) and a sodium aluminate supersaturated liquor to be decomposed (D) in the presence of a seed (10), the method starting with the following step:

   a) digesting (A2) bauxite (1), at a temperature higher than 200°C, by putting it into contact with a liquor (20) for which the caustic soda concentration is greater than or equal to 160 g Na2O/l and for which the weight ratio Rp is between 0.45 and 0.75, for a sufficient contact period in order to solubilize alumina monohydrate and to achieve a Rp value between 1.10 and 1.20;
   and then followed by the succession of the following characteristic steps:
   b) cooling and flash (N1) of the thereby formed slurry then feeding (N2) of alumina trihydrate (6) in said slurry, at a temperature less than 200°C, in order to obtain upon depressurization to atmospheric pressure (N3), a Rp value of the aluminate liquor between 1.20 and 1.30;
   c) a first dilution (N4) of the suspension so that a caustic soda concentration between 160 and 175 g Na2O/l may be obtained;
   d) settling of the thereby formed slurry (3a) in order to separate from the insoluble residue (5) a sodium aluminate liquor (4a) for which Rp should be between 1.20 and 1.30.
   e) filtration of the aluminate liquor (4a)
   f) complementary dilution (M) lowering the concentration of the aluminate liquor to less than 160 g Na2O/l, performed before or during the decomposition (D).
   g) recycling, after having separated the alumina trihydrate by filtration, of the spent liquor (8) which, after concentration (E), is reused as an digestion liquor (20) at the head of the process with a caustic soda concentration greater than or equal to 160 g Na2O/l.

2. A method for processing bauxite according to claim 1, **characterized in that** the caustic soda concentration of the digestion liquor is between 160 and 220 g Na2O/l.

3. The method for processing bauxite according to any of claims 1 to 2, **characterized in that** the digestion of the monohydrate bauxite is performed between 220°C and 300°C for 0.2 to 1 hour.

4. The method for processing bauxite according to any of claims 1 to 3, **characterized in that** the feeding of alumina trihydrate in step (b) is performed by injecting a pulp (6), obtained by grinding an alumina trihydrate bauxite (13) or of wastes containing it, in the presence of an aliquot of the etching liquor (20c).

5. The method for processing bauxite according to any of claims 1 to 4, **characterized in that** the feeding of alumina trihydrate into the slurry is performed between 130°C and 190°C.

6. The method for processing bauxite according to any of claims 1 to 5, **characterized in that** the slurry (3a) resulting from the "sweetening" step (N2) undergoes settling in the presence of a flocculant of the synthetic polyacrylate type at a temperature at least equal to the boiling temperature minus five degrees Celsius.

7. The method for processing bauxite according to any of claims 1 to 6, **characterized in that** the sodium aluminate pregnant liquor (4a) obtained after settling (C1) and filtration (C2) has a Rp value between 1.20 and 1.28.

8. The method for processing bauxite according to any of claims 1 to 7, **characterized in that** the complementary dilution (M) of the aluminate liquor (4a) is performed after filtration (C2) of said liquor, with a pre-filtered fraction (7c) of the waters from the washing of the unetched residues which may contain waters (13a) from the washing of the produced trihydrate.

9. The method for processing bauxite according to any of claims 1 to 8, **characterized in that** the sodium aluminate liquor (4a) obtained after settling (C1) and filtration (C2) is diluted (M) to a caustic soda concentration between 140 and 155 g Na2O/l then decomposed between 80°C and 50°C.

10. The method for processing bauxite according to any of claims 1 to 9, **characterized in that** the Rp value of the liquor at the end of the decomposition (D) is between 0.55 and 0.65.

**Patentansprüche**

1. Verfahren zur Behandlung von aluminiummonohydrathaltigem Bauxit (1) durch Aufschluss des gemahlenen Bauxits mit Natriumhydroxid und bei hoher Temperatur (A2) zur Bildung einer Suspension, aus der durch Absetzen (C1) und Filtrieren (C2) ein unlöslicher Rückstand (5) und eine übersättigte Natriumaluminatlauge, die in Anwesenheit von Keimbildnem (10) zersetzt (D) werden soll, abgetrennt werden, wobei das Verfahren mit folgendem Schritt beginnt:

   a) Aufschließen (A2) des Bauxits (1) bei einer Temperatur von über 200°C, indem er mit einer Lauge (20), deren Konzentration an Natriumhydroxid größer oder gleich 160 g $Na_2O$/Liter ist und deren Gewichtsverhältnis Rp im Bereich von 0,45 bis 0,75 liegt, während einer Zeit, die ausreicht, um das Aluminiummonohydrat löslich zu machen und einen Rp-Wert im Bereich von 1,10 bis 1,20 zu erreichen, in Kontakt gebracht wird;
   und dann mit der folgenden kennzeichnenden Schrittfolge weitergeführt wird:
   b) Abkühlen und Entspannen (N1) der so gebildeten Suspension, dann Einbringen (N2) von Aluminiumhydroxid (6) in die Suspension bei einer Temperatur unterhalb 200°C, um bei Atmosphärendruck (N3) einen Rp-Wert der Aluminatlösung im Bereich von 1,20 bis 1,30 zu erhalten;
   c) erstes Verdünnen (N4) der Suspension zur Erzielung einer Konzentration an Natriumhydroxid im Bereich von 160 bis 175 g $Na_2O$/Liter;
   d) Absetzen der so gebildeten Suspension (3a), um aus dem unlöslichen Rückstand (5) eine Natriumaluminatlauge (4a) abzutrennen, deren Rp im Bereich von 1,20 bis 1,30 liegen muss;
   e) Filtrieren der Aluminatlauge (4a);
   f) weiteres Verdünnen (M) vor oder im Verlauf der Zersetzung (D), wodurch die Konzentration der Aluminatlauge auf weniger als 160 g $Na_2O$/Liter herabgesetzt wird;
   g) Rückführung der zersetzten Lauge (8) nach erfolgter Abtrennung des Aluminiumhydroxids durch Filtration, welche Lauge nach erfolgter Konzentrierung (E) im vorlaufenden Prozess als Aufschlusslösung mit einer Konzentration an Natriumhydroxid von größer oder gleich 160 g $Na_2O$/l wiederverwendet wird.

2. Verfahren zur Behandlung von Bauxit nach Anspruch 1, **dadurch gekennzeichnet, dass** die Konzentration an Natriumhydroxid der Aufschlusslösung im Bereich von 160 bis 220 g $Na_2O$/l liegt.

3. Verfahren zur Behandlung von Bauxit nach einem der Ansprüche 1 bis 2, **dadurch gekennzeichnet, dass** der Aufschluss des aluminiummonohydrathaltigen Bauxits zwischen 220°C und 300°C während 0,2 bis 1 Stunde durchgeführt wird.

4. Verfahren zur Behandlung von Bauxit nach einem der Ansprüche 1 bis 3, **dadurch gekennzeichnet, dass** das Einbringen von Aluminiumhydroxid von Schritt b) durch Einspritzung eines durch Mahlen in Anwesenheit eines aliquoten Teils der Aufschlusslösung (20c) gewonnen Breis aus einem aluminiumhydroxidhaltigen Bauxit oder aus Abfallstoffen, die einen solchen enthalten, erfolgt.

5. Verfahren zur Behandlung von Bauxit nach einem der Ansprüche 1 bis 4, **dadurch gekennzeichnet, dass** das Einbringen des Aluminiumhydroxids in die Suspension zwischen 130°C und 190°C erfolgt.

6. Verfahren zur Behandlung von Bauxit nach einem der Ansprüche 1 bis 5, **dadurch gekennzeichnet, dass** man die aus dem "sweetening" (N2) hervorgegangene Suspension (3a) in Anwesenheit von Flockungsmitteln vom Typ Synthesepolyakrylat bei einer Temperatur absetzen lässt, die mindestens der Siedetemperatur minus fünf Grad Celsius entspricht.

7. Verfahren zur Behandlung von Bauxit nach einem der Ansprüche 1 bis 6, **dadurch gekennzeichnet, dass** die nach Absetzen (C1) und Filtration (C2) erhaltene übersättigte Natriumaluminatlauge (4a) einen Rp-Wert im Bereich von 1,20 bis 1,28 hat.

8. Verfahren zur Behandlung von Bauxit nach einem der Ansprüche 1 bis 7, **dadurch gekennzeichnet, dass** die weitere Verdünnung (M) der Aluminatlauge (4a) nach erfolgter Filtration (C2) der Lauge mit einer vorher filtrierten Fraktion (7c) des Waschwassers der unverändert gebliebenen Rückstände erfolgt, welches das Waschwasser (13a) des gewonnenen Hydroxids enthalten kann.

9. Verfahren zur Behandlung von Bauxit nach einem der Ansprüche 1 bis 8, **dadurch gekennzeichnet, dass** die nach Absetzen (C1) und Filtration (C2) entstandene Natriumaluminatlauge (4a) bis auf eine Konzentration an Natriumhydroxid im Bereich von 140 bis 155 g $Na_2O$/l verdünnt wird und anschließend zwischen 80°C und 50°C zersetzt wird.

10. Verfahren zur Behandlung von Bauxit nach einem der Ansprüche 1 bis 9, **dadurch gekennzeichnet, dass** der Rp-Wert der Lauge nach abgeschlossener Zersetzung (D) im Bereich von 0,55 bis 0,65 liegt.

Figure 1

Figure 2